(19) Europäisches Patentamt
European Patent Office
Office européen des brevets

(11) **EP 2 713 244 A1**

(12) **EUROPEAN PATENT APPLICATION**

(43) Date of publication:
**02.04.2014 Bulletin 2014/14**

(51) Int Cl.:
***G06F 3/041*** *(2006.01)*

(21) Application number: **12290327.1**

(22) Date of filing: **01.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventor: **Van Lier, Jan**
**70825 Korntal-Münchingen (DE)**

(74) Representative: **Wetzel, Emmanuelle**
**Alcatel Lucent**
**Intellectual Property & Standards**
**70430 Stuttgart (DE)**

(54) **Touchscreen device with parallax error compensation**

(57)     A touchscreen device (1), comprising:
a touch-sensitive touchscreen (2);
a processing unit (5) provided to process coordinates of touch positions (T) determined by the touch-sensitive touchscreen (2);
wherein the processing unit (5) is provided for determining correction amounts for the coordinates of touch positions (T) in at least one direction, based on an input regarding an angle of observation (α) of a user (11);

a method of compensating for a parallax error in a touch position (T) of a touchscreen (2) of such a touchscreen device (1); and
a software module (7) for controlling an execution of steps of such a method.

FIG. 2

**Description**

The invention relates to a touchscreen device, a method of compensating for a parallax error of a touchscreen device and a software module for carrying out the method.

<u>BACKGROUND ART</u>

When working with touchscreen devices that include a touchscreen, it is not always possible or comfortable for a user to view the touchscreen perpendicularly. For larger touchscreens in particular, it is not possible for the user to view all regions of the touchscreen perpendicularly without moving. Due to a parallax error, looking at the touchscreen of the touchscreen device with a non-perpendicular direction leads to a misalignment of a desired touch position and a touch position sensed by the touchscreen. This may lead to problems when using the touchscreen as an input device, for instance by using a virtual keyboard or other virtual input units that require a certain precision for a touch position sensed by the touchscreen. Missing the desired touch position is annoying to the user and is lowering the touchscreen input performance.

It is therefore desirable to provide a touchscreen device with a higher operating comfort with regard to a parallax error allowing higher touchscreen input precision.

<u>DESCRIPTION</u>

It is therefore an object of the invention to provide a touchscreen device with an at least partially compensated parallax error.

In one aspect of the present invention, the object is achieved by a touchscreen device comprising:

- a touch-sensitive touchscreen;
- a processing unit provided to process coordinates of touch positions determined by the touch-sensitive touchscreen;

wherein the processing unit is provided for determining correction amounts for the coordinates of touch positions in at least one direction, based on an input regarding an angle of observation of a user. By that it can be accomplished that a touch position generated by the user that is determined by the touch-sensitive touchscreen and that, due to a parallax error, misses a position range on the touchscreen required to activate a desired action, can be corrected so that the desired action is activated anyhow.

According to a preferred embodiment, the touchscreen device is selected from a group consisting of a tablet computer, a smartphone, and a personal digital assistant. The ease of use of any of these touchscreen devices can be substantially improved by the determined correction amounts.

In another preferred embodiment, the input regarding the angle of observation of the user is provided as an input by the user. Thus, the determined correction amounts can readily be adjusted to a user's position with regard to the touchscreen device, which influences the angle of observation. The input may be provided by the user by selecting an angle of observation from a list of pre-determined angles of observations. Alternatively, the angle of observation may be implicitly chosen by selecting a position from a drop-down list of potential positions of the user, for instance *"sitting"*, *"lying on a sofa"*, and so forth, for which a most likely angle of observation may be deposited in the touchscreen device.

In a further preferred embodiment, the input regarding the angle of observation of the user is obtained from an output of a photographic device. In a suitable arrangement, in which a position of the photographic device is well-defined relative to a reference point at the touchscreen device, the angle of observation may be determined by basic geometrical considerations. The photographic device may provide its output to the touchscreen device preferably via a wireless data connection. The angle of observation may periodically be determined from outputs of the photographic device.

In yet another embodiment, the photographic device is designed as a digital photographic camera which is an integral part of the touchscreen device. Thus, a position of the photographic device is well-defined relative to a reference point at the touchscreen device, and an angle of observation can readily be determined from the output of the digital photographic camera.

It is another object of the invention to provide a method of compensating for a parallax error in a touch position of a touchscreen of a touchscreen device, the parallax error occurring from a user viewing at the touchscreen at an angle of observation that differs from a direction that is perpendicular to the touchscreen.

The method comprises steps of:

- estimating the angle of observation between the user and at least one location on the touchscreen device based on at least one picture of the user from a photographic device;
- determining a correction amount in at least one direction parallel to a touchscreen surface;

- adjusting at least one coordinate of the touch position as determined by the touchscreen by the correction amount, in the at least one direction parallel to the touchscreen surface.

Preferably, the at least one location on the touchscreen device may be a point of reference of the touchscreen device; i.e. all dimensions and relative orientations of the touchscreen of the touchscreen device with regard to the point of reference are well-defined and may be stored, for instance, in a memory unit of the touchscreen device.

In a preferred embodiment, the correction amount in the at least one direction is at least based on a touchscreen material property and a touchscreen dimension. The touchscreen material property may preferably be a refraction index for visible light and the touchscreen dimension may preferably be a thickness of a top layer of the touchscreen. In a more complex embodiment, the correction amount may be based on the refraction indices for visible light and thicknesses of a plurality of layers that the touchscreen comprises.

In yet another preferred embodiment, the method comprises a step of determining a second correction amount in at least one direction parallel to a touchscreen surface, if the touch position is generated by one out of a finger and a stylus device, wherein determining the second correction amount is at least based on the angle of observation and one out of a finger dimension and a stylus device dimension. An operation mode to determine the second correction amount may be selected by the user, intending to use one out of a finger and a stylus device for inputting data. By that, the method can additionally compensate for a misalignment generated by a finite, non-zero dimension of the finger or the stylus device.

In still another preferred embodiment, the step of estimating the angle of observation involves a pattern recognition step regarding user's eyes. This can allow for a fast and reliable determination of the angle of observation. In the case of several users being detected by the pattern recognition step regarding user's eyes, a face recognition method may be employed for detecting a preferred user of the touchscreen device.

In another aspect of the invention, a software module for controlling an execution of steps of at least one embodiment of the disclosed methods or a variation thereof is provided, wherein the steps are converted into a program code that is implementable in a memory unit of the touchscreen device and that is executable by a processing unit of the touchscreen device. By that, a flexible and portable solution can be provided that may readily be implemented into any touchscreen device.

These and other aspects of the invention will be apparent from and elucidated with reference to the embodiments described hereinafter.

BRIEF DESCRIPTION OF THE DRAWINGS

In the drawings:

Fig. 1 schematically illustrates an embodiment of an electronic touchscreen device in accordance with the invention;
Fig. 2 shows a schematic sectional partial side view of the electronic touchscreen device pursuant to Fig. 1 with a stylus device; and
Fig. 3 shows a schematic sectional partial side view of the electronic touchscreen device pursuant to Fig. 1 with another stylus device.

DETAILED DESCRIPTION

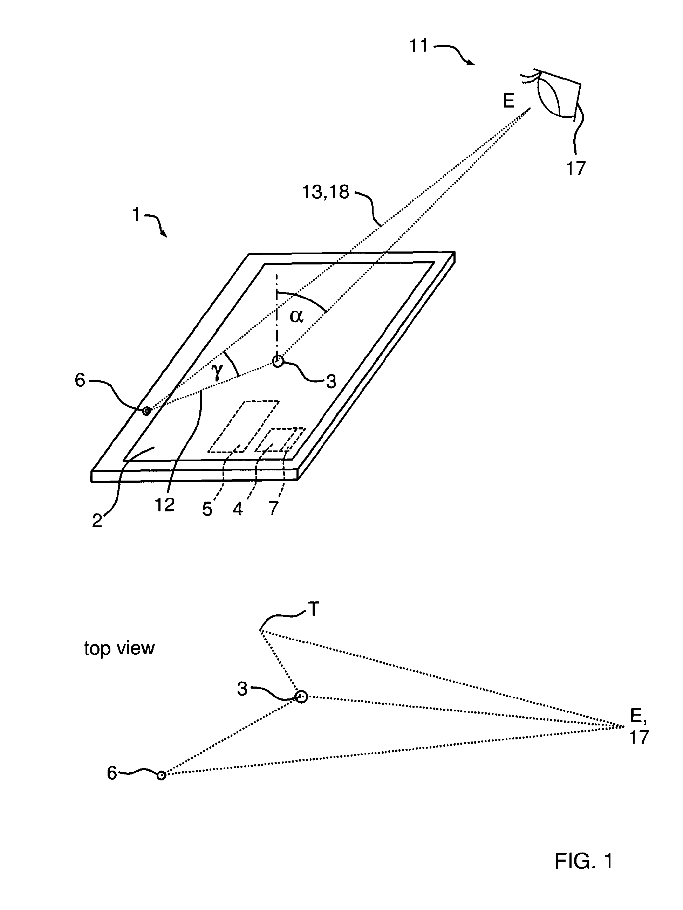

Fig. 1 schematically illustrates an embodiment of an electronic touchscreen device 1 in accordance with the invention. The electronic touchscreen device 1 is designed as a tablet computer having a touch-sensitive touchscreen 2, but could as well be selected from a group consisting of a tablet computer, a smartphone, and a personal digital assistant. The electronic touchscreen device 1 could also be designed as any other electronic device having a touchscreen, for instance a television screen, a personal computer (PC) screen, a ticket machine in a train station, a boarding pass machine in an airport, a cash terminal, or any other vending machine. As is commonly known, a user 11 can touch a specific area on the touchscreen 2 to activate a desired action, such as opening a software application or inputting a text on a virtual keyboard. The touchscreen device 1 comprises a processing unit 5 provided to process coordinates of touch positions determined by the touch-sensitive touchscreen 2. Based on the determined coordinates, the processing unit 5 checks if the specific area was touched and, based on an outcome of that check, starts the desired action if so.

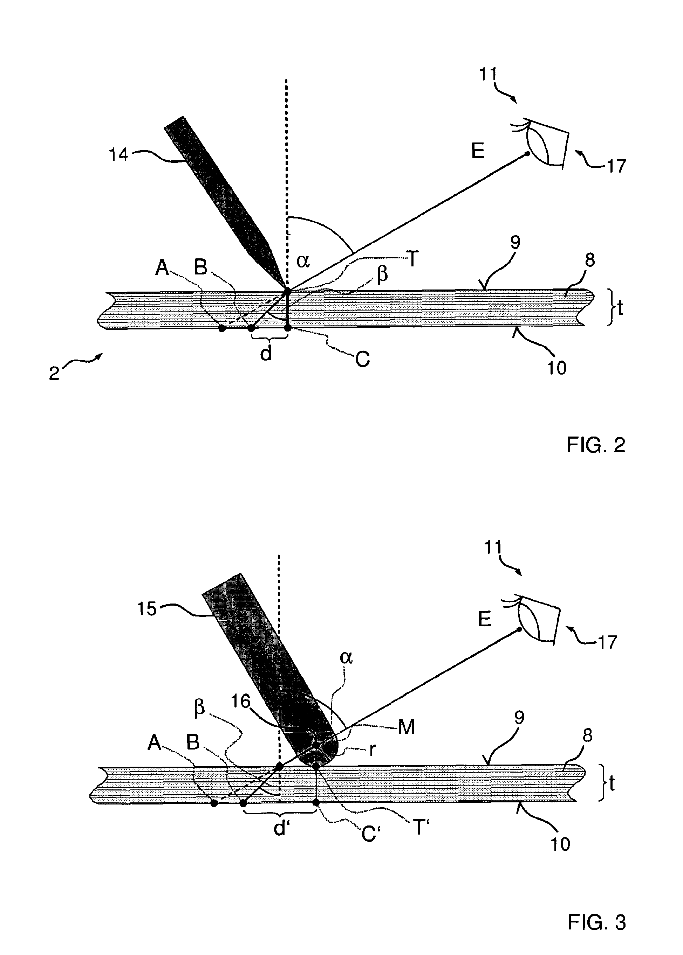

Fig. 2 shows a schematic sectional partial side view of the electronic touchscreen device 1 pursuant to Fig. 1. As is known in the art, the touchscreen 2 comprises multiple layers of transparent materials such as glass, plastics, conductive coatings like indium tin oxide (ITO), separation layers filled with air, and so forth, which the one skilled in the art is familiar with. These multiple layers are symbolized by one transparent layer 8 only to describe the working principle, which can be applied to a more realistic case in the same manner.

The specific area that needs to be touched to start a desired action is located above a lower surface 10 of the transparent layer 8, whereas the user 11 can only touch an upper surface 9 of the transparent layer 8. When the touchscreen 2 is viewed on by the user 11 from a direction that is perpendicular to the upper surface 9, the specific area cannot be missed.

This changes if the touchscreen 2 is viewed on by the user 11 from a direction that is not perpendicular to the upper surface 9, and an angle of observation $\alpha$ measured from the perpendicular direction differs substantially from 0°. Fig. 2 shows an extremely large angle of observation $\alpha$ for clarity purposes.

The user 11 at position E views the touchscreen 2 and touches the upper surface 9 with a stylus device 14 having a sharp tip, with the intention to touch a specific area for starting a desired action, wherein the specific area is symbolized by the corresponding point B at the lower surface 10 of the touchscreen 2. However, instead of touching the upper surface 9 at a location which lies above point B in the perpendicular direction, the user 11 touches the upper surface 10 at a touch position T that is an intersection point of the upper surface 9 and a straight line between the user 11 and an apparent position A of the point B, due to the refraction of light in the transparent layer 8 having a refraction index n that is larger than the one of air. The actually touch position T of the upper surface 9 corresponds to a position C of the lower surface 10 of the transparent layer 8 which has a lateral deviation d to the intended touch point B. The lateral deviation d is the parallax error.

From simple geometrical considerations, the lateral deviation d equals to

$$d = t \cdot \tan \beta \qquad\qquad\qquad [1]$$

wherein $\beta$ denotes an angle of incidence of the light coming from point B and t a thickness of the transparent layer 8. (Note: As mentioned before, touchscreens are usually multi-layer systems in which each layer i may exhibit a different refraction index $n_i$, leading to a more complex calculation of the incidence angle $\beta$, but using the same principles of simple geometrical optics.)

The angle of incidence $\beta$ can be determined from the angle of observation $\alpha$ and the refraction index n of the transparent layer 8 by applying Snell's law (refraction index of air = 1):

$$\sin \beta = \sin \alpha / n \qquad\qquad\qquad [2]$$

wherein $\alpha$ denotes the angle of observation corresponding to an angle of emergence.

The processing unit 5 of the touchscreen device 1 is provided for determining correction amounts for the coordinates of touch positions T in at least one direction, based on an input regarding an angle of observation $\alpha$ of a user 11. In the embodiment pursuant to Fig. 2, the correction amounts are represented by the lateral deviation d according to the above formulas [1] and [2]. The correction amounts in the at least one direction are therefore based on a touchscreen material property given by the refraction index n and a touchscreen dimension given by its thickness t.

Alternatively, the correction amounts which take into account the real layer sequence, dimensions and refraction indices $n_i$ of the touchscreen 2 may be stored for various angles of observation $\alpha$ of the user 11 in a look-up table in a memory unit 4 of the touchscreen device 1.

By applying the correction amounts to the coordinates of the touch position T as determined by the touch-sensitive touchscreen 2, the touch by the user 11 will be considered as a touch on the upper surface 9 at a location that lies above the point B in the perpendicular direction, as was intended by the user 11.

The touchscreen device 1 comprises several ways of providing the input regarding the angle of observation $\alpha$ of the user 11. The way of providing the input can be selected by the user 11 at discretion at the touchscreen device 1.

One way of providing the input regarding the angle of observation $\alpha$ by the user 11 is by selecting a position from a drop-down list of potential positions of the user 11. The drop-down list may comprise exemplary positions, for instance *"standing", "lying on a sofa", "sitting at desk",* each of which a most likely angle of observation $\alpha$ may be deposited for in the memory unit 4 of the touchscreen device 1.

As this selection has to be adjusted according to the actual situation and is therefore subject to human error, the touchscreen device 1 also has another way of providing the input regarding the angle of observation $\alpha$ that is not.

To this end, the touchscreen device 1 comprises a photographic device 6 (Fig. 1) that is designed as a digital photographic camera, and which is an integral part of the touchscreen device 1. The input regarding the angle of observation $\alpha$ of the user 11 is obtained from an output of the photographic device 6, as will be explained in the following.

If this way of providing the input regarding the angle of observation $\alpha$ is selected by the user 11, the digital photographic camera is activated and periodically takes pictures of the user 11. A location of the photographic device 6 is well-defined relative to a reference point 3 at the touchscreen device 1 that is given by a center point of the upper surface 9 of the touchscreen 2.

The processing unit 5 of the touchscreen device 1 has access to the memory unit 4, and a software module 7 comprises steps of a method described as follows that are converted into a program code that is implemented in the memory unit 4 and that is executable by the processing unit 5.

In a first step, the picture of the user 11 is taken as described before. Then, a pattern recognition step regarding user's eyes 17 is carried out that employs an interpupillary distance. The individual interpupillary distance of the user 11 may have been measured in an extra preparatory step. Alternatively, an average interpupillary distance may be used that is stored in the memory unit 4.

From a first distance 12 between the photographic device 6 and the reference point 3 at the touchscreen device 1, an angle $\gamma$ between the touchscreen upper surface 9 and a virtual connecting line 13 from the photographic device 6 to the user's eyes 17, and a second distance 18 between the photographic device 6 and the user's eyes 17 along the virtual connecting line 13, the angle of observation $\alpha$ can readily be determined from the output of the digital photographic camera represented by the pictures, as two sides and an enclosed angle of a triangle are known. The lower part of Fig. 1 shows a top view of the triangle for illustration. Alternatively, the angle of observation $\alpha$ may be estimated in another step, using the first distance 12 between the photographic device 6 and the reference point 3 at the touchscreen device 1, the angle $\gamma$ between the touchscreen upper surface 9 and the virtual connecting line 13 from the photographic device 6 to the user's eyes 17, and an average reading distance between the user's eyes 17 and the reference point 3. An ambivalent situation with more than one possible solution may occur in this case, but a unique solution can usually be obtained by plausibility considerations. The average reading distance may alternatively be an input provided by the user 11, either by manually inputting a number or by selecting a reading distance from a list of potential options.

In a next step, a correction amount in at least one direction parallel to the touchscreen upper surface 9 is determined by using the previously discussed formulas [1] and [2]. Finally, the touch position as determined by the touchscreen 2 is adjusted by the correction amount, in the at least one direction.

The determined correction amount is used for adjusting touch positions T as determined by the touchscreen 2 that are located nearby the reference point 3. For touch positions T located closer to edges of the touchscreen 2, the angle of observation $\alpha$ can be obtained by applying basic analytical geometry considerations to a known distance and direction of a virtual connecting line between the reference point 3 and the user's eyes 17, and a known distance and direction of a virtual connecting line between the reference point 3 and the touch position T, as a virtual connecting line between the touch position T and the user's eyes 17 can be considered a vector sum of the two (Fig. 1, top view). The angle of observation $\alpha$ is readily obtainable from building the dot product of the virtual connecting line between the touch position T and the user's eyes 17 as a first vector and a surface normal of the touchscreen 2 at the touch position T as a second vector.

A variation of the method is applicable to a situation in which the stylus does not end in a fine tip as the stylus 14 shown in Fig. 2, but rather when the user 11 wishes to operate the touchscreen 2 by using a finger or another stylus device 15 having a finite, non-zero lateral dimension as schematically shown in Fig. 3. In this embodiment, the stylus device 15 shall be the only feature differing from the embodiment pursuant to Fig. 2. An operating mode for the touchscreen device 1 (finger, type of stylus) can be selected by the user 11 at discretion at the touchscreen device 1.

For simplification, the end of the finger or stylus device 15 is shaped as a hemisphere of radius r. The user 11 at position E views the touchscreen 2 and touches the upper surface 9 with the stylus device 15 having a finite, non-zero lateral dimension of 2r with the intention to touch a specific area for starting a desired action, wherein the specific area is symbolized by the corresponding point B at the lower surface 10 of the touchscreen 2. However, instead of touching the upper surface 9 at a location which lies above point B in the perpendicular direction, the user 11 touches the upper surface 9 with the stylus device 15 at a touch position T' that is defined by the center of the hemispherical tip 16 lying on the virtual straight line between the user 11 and the apparent position A of the point B due to the refraction of light in the transparent layer 8 as described before. The actually touched touch position T' of the upper surface 9 corresponds to a position C' of the lower surface 10 of the transparent layer 8 which has a lateral deviation d' to the intended touch point B. The lateral deviation d' is the parallax error.

Here, the lateral deviation d' equals to

$$d' = t \cdot \tan \beta + r \cdot \tan \alpha \qquad [3]$$

For the angle of incidence $\beta$, the same considerations apply as in the previous embodiment. In addition to the method described earlier, a step of determining a second correction amount in the direction parallel to the touchscreen upper surface 9 is carried out. The determination of the second correction amount as reflected by the second term in equation [3] is based on the angle of observation $\alpha$ and the stylus device dimension r.

By applying the first and the second correction amount to the coordinates of the touch position T' as determined by the touch-sensitive touchscreen 2, the touch by the user 11 with the stylus device 15 will be considered as a touch of the upper surface 9 at a location that lies above the point B in the perpendicular direction, as was intended by the user 11.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

**Claims**

1. A touchscreen device (1), comprising:

   a touch-sensitive touchscreen (2);
   a processing unit (5) provided to process coordinates of touch positions (T) determined by the touch-sensitive touchscreen (2);
   wherein the processing unit (5) is provided for determining correction amounts for the coordinates of touch positions (T) in at least one direction, based on an input regarding an angle of observation ($\alpha$) of a user (11).

2. The touchscreen device (1) as claimed in claim 1, wherein the touchscreen device (1) is selected from a group consisting of a tablet computer, a smartphone, and a personal digital assistant.

3. The touchscreen device (1) as claimed in claim 1 or 2, wherein the input regarding the angle of observation ($\alpha$) of the user (11) is provided as an input by the user (11).

4. The touchscreen device (1) as claimed in claims 1 to 2, wherein the input regarding the angle of observation ($\alpha$) of the user (11) is obtained from an output of a photographic device (6).

5. The touchscreen device (1) as claimed in one of the preceding claims, wherein the photographic device (6) is designed as a digital photographic camera which is an integral part of the touchscreen device (1).

6. A method of compensating for a parallax error in a touch position (T) of a touchscreen (2) of a touchscreen device (1), the parallax error occurring from a user (11) viewing at the touchscreen (2) at an angle of observation ($\alpha$) that differs from a direction that is perpendicular to the touchscreen (2), the method comprising steps of:

   - estimating the angle of observation ($\alpha$) between the user (11) and at least one location on the touchscreen device (1) based on at least one picture of the user (11) from a photographic device (6);
   - determining a correction amount in at least one direction parallel to a touchscreen surface (9, 10);
   - adjusting at least one coordinate of the touch position (T) as determined by the touchscreen (2) by the correction amount, in the at least one direction parallel to the touchscreen surface (9, 10).

7. The method of compensating as claimed in claim 6, wherein the correction amount in the at least one direction is at least based on a touchscreen material property and a touchscreen dimension.

8. The method of compensating as claimed in any of claims 6 or 7, further comprising a step of determining a second correction amount in at least one direction parallel to the touchscreen surface (9, 10), if the touch position (T') is generated by one out of a finger and a stylus device (15), wherein determining the second correction amount is at least based on the angle of observation ($\alpha$) and one out of a finger dimension and a stylus device dimension.

9. The method of compensating as claimed in any of claims 6 to 8, wherein the step of estimating the angle of observation ($\alpha$) involves a pattern recognition step regarding user's eyes (17).

10. A software module (7) for controlling an execution of steps of the method as claimed in any of claims 6 to 9, wherein the steps are converted into a program code that is implementable in a memory unit (4) of a touchscreen device (1) and that is executable by a processing unit (5) of the touchscreen device (1).

top view

FIG. 1

FIG. 2

FIG. 3

Europäisches
Patentamt

European
Patent Office

Office européen
des brevets

# EUROPEAN SEARCH REPORT

Application Number

EP 12 29 0327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2011/285657 A1 (SHIMOTANI MITSUO [JP] ET AL) 24 November 2011 (2011-11-24)<br>* paragraphs [0009], [0010]; figures 1, 5 *<br>* paragraph [0052] - paragraph [0072] *<br>----- | 1,4-6, 8-10<br>7 | INV.<br>G06F3/041 |
| X<br>Y | US 2006/279552 A1 (TONOUCHI YOJIRO [JP]) 14 December 2006 (2006-12-14)<br>* figures 19, 20 *<br>* paragraph [0003] *<br>* paragraph [0101] - paragraph [0107] *<br>----- | 1-3,6,10<br>7 | |

TECHNICAL FIELDS
SEARCHED     (IPC)

G06F

The present search report has been drawn up for all claims

| Place of search | Date of completion of the search | Examiner |
|---|---|---|
| Berlin | 28 February 2013 | Reise, Berit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 12 29 0327

This annex lists the patent family members relating to the patent documents cited in  the above-mentioned European search report.
The members are as contained in the European Patent Office EDP file on
The European Patent Office is in no way liable for these particulars which are merely given for the purpose of information.

28-02-2013

| Patent document cited in search report | | Publication date | Patent family member(s) | | Publication date |
|---|---|---|---|---|---|
| US 2011285657 | A1 | 24-11-2011 | CN | 102365610 A | 29-02-2012 |
| | | | DE | 112010001445 T5 | 25-10-2012 |
| | | | US | 2011285657 A1 | 24-11-2011 |
| | | | WO | 2010113397 A1 | 07-10-2010 |
| US 2006279552 | A1 | 14-12-2006 | JP | 4309871 B2 | 05-08-2009 |
| | | | JP | 2006350545 A | 28-12-2006 |
| | | | US | 2006279552 A1 | 14-12-2006 |

EPO FORM P0459

For more details about this annex : see Official Journal of the European Patent Office, No. 12/82